# EUROPÄISCHE PATENTANMELDUNG

(11) **EP 1 283 637 A2**
(43) Veröffentlichungstag der Anmeldung: **12.02.2003**
(21) Anmeldenummer: 02017817.4
(22) Anmeldetag: 07.08.2002
(51) Int. Cl.: H04N 5/44

(54) **Schaltung und Verfahren zur Bildung einer seriellen Schnittstelle für eine MultiMediaCard TM**

(30) Priorität: 07.08.2001 DE 10138714
(71) Anmelder: SIEMENS AKTIENGESELLSCHAFT, 80333 München (DE)
(72) Erfinder: Müller, Dieter-Wolfgang, 76744 Vollmersweiler (DE)

(57) **Zusammenfassung**

Die Erfindung betrifft eine Schaltung zur Bildung einer seriellen Schnittstelle für eine MultiMediaCard^{TM} mit MultiMediaCard^{TM}-Interface (1). Die erfindungsgemäße Schaltung umfasst eine an ein paralleles Standard-Mikroprozessor-Interface (2) anschließbare Kommunikationseinheit (3) und ein mit dem MultiMediaCard^{TM}-Interface (1) verbindbares Schieberegister (6; 6a, 6b). Die Erfindung betrifft ferner ein Verfahren zum seriellen Datenaustausch mit einer MultiMediaCard^{TM}

## Beschreibung

### Technisches Gebiet

Die vorliegende Erfindung betrifft eine Schaltung zur Bildung einer Serienschnittstelle für eine MultiMediaCard™ (nachfolgend auch mit MMC abgekürzt). Des Weiteren betrifft die Erfindung ein Verfahren zum seriellen Datenaustausch mit einer MMC.

Eine MMC im Sinne der vorliegenden Beschreibung wird von der Firma Infineon Technologies AG, Deutschland angeboten und vertrieben. Für nähere technische Details wird auf das hierzu von der Infineon Technologies AG ausgegebene Datenblatt SLA F0016 H CA verwiesen. Die in diesem Datenblatt enthaltenen Informationen werden durch ausdrückliche Bezugnahme hierauf mit in die Offenbarung der vorliegenden Beschreibung aufgenommen.

Die MMC ist ein neuer Speicherstandard der Infineon Technologies AG mit einer seriellen Schnittstelle als Interface. Die MMC kann in zwei Betriebsarten betrieben werden. Dies sind der SPI-Mode und der MMC-Mode. Beide Modi sind in dem zuvor genannten Datenblatt ausführlich erläutert. Der SPI-Mode ist seit längerem bekannt und wird insbesondere von bestimmten Mikrocontrollern der Firma Motorola verwendet. Der MMC-Mode ist ein neu entwickelter Modus, der speziell auf die Belange der MMC und deren Anwendungen abgestimmt ist.

Bei der MMC handelt es sich um eine programmierbare Einrichtung. Die Programmierung soll insbesondere mit Hilfe eines Standard-PC's oder einer Simatic PG programmierbar sein. Ferner soll auch ein Datenaustausch mit solchen Geräten durchführbar sein. Um eine derartige Kommunikation mit der MMC durchführen zu können, ist eine Schnittstelle notwendig.

### Stand der Technik

Zur Schaffung einer MMC-Schnittstelle gibt es bisher folgende Lösungen. Zum einen ein so genanntes I/O-Interface. Hier erfolgt die Ansteuerung der MMC über I/O-Signale. Bei dieser Lösung werden Takt- und Datensignale über Setzen und Rücksetzen von I/O-Ports gebildet. Der Vorteil einer derartigen Lösung besteht darin, dass sie sehr kostengünstig ist. Nachteilig ist aber die äußerst langsame Kommunikation mit der MMC. Eine alternative Lösung ist ein SPI-Businterface. Zur Ansteuerung wird bei dieser Lösung ein Mikroprozessor bzw. Controller mit SPI-Bus benötigt. Der Vorteil dieser Lösung ist in der relativ hohen Kommunikationsgeschwindigkeit zu sehen. Nachteilig ist aber, dass ein Controller bzw. Mikroprozessor mit genau diesem Interface (SPI-Bus) notwendig ist und dementsprechend der MMC-Mode nicht nutzbar ist. Eine dritte Alternative besteht in einem speziellen Controller, der eine MMC-Schnittstelle aufweist (beispielsweise ROSA-Interface von Infineon Technologies AG). Hier erfolgt die Ansteuerung über eine Standard-Mikroprozessor-Schnittstelle, die den MMC-Mode voll unterstützt. Der Vorteil dieser Lösung ist in der sehr guten Performance zu sehen. Nachteilig ist, dass dieser Controller nicht als Standard-Chip erhältlich ist und eine solche FBGA-Lösung teuer ist.

### Darstellung der Erfindung

Das der Erfindung zugrunde liegende technische Problem besteht darin, eine kostengünstige Schnittstelle für eine MMC bereitzustellen, die eine gute Performance aufweist und beide Modi der MMC unterstützt. Ferner liegt der Erfindung das technische Problem zugrunde, ein Verfahren anzugeben, mit dem ein serieller Datenaustausch mit einer MMC kostengünstig und in beiden Modi der MMC durchführbar ist.
Diese technischen Probleme werden durch eine Schaltung mit den Merkmalen des Anspruchs 1 bzw. durch ein Verfahren mit den Merkmalen des Anspruchs 6 gelöst. Eine erfindungsgemäße Schaltung zur Bildung einer seriellen Schnittstelle für eine MultiMediaCard™ mit MultiMediaCard™-Interface umfasst eine Kommunikationseinheit, die an ein paralleles Standard-Mikroprozessor-Interface anschließbar ist und ein mit dem MultiMediaCard™-Interface verbindbares Schieberegister aufweist. Durch die Kombination eines parallelen Standard-Mikroprozessor-Interface und einer einfachen Schieberegisterschaltung wird eine äußerst kostengünstige, aber gleichzeitig eine gute Performance aufweisende MMC-Schnittstelle erzielt. Die erfindungsgemäße Schaltung unterstützt dabei sowohl den SPI-Mode als auch den MMC-Mode. Für eine derartige erfindungsgemäße Lösung sind lediglich Standard-Bauelemente notwendig. Die gute Leistung bzw. Performance ist durch die hardwaremäßige Unterstützung der Umsetzung der Parallelschnittstelle des Standard-Mikroprozessor-Interface auf den seriellen Bus erzielbar. Außerdem ist die erfindungsgemäße Lösung in einfacher Weise auf eine Variante der MMC abwandelbar, die so genannte SD-Card, die eine bezüglich der Sicherheit modifizierte MMC darstellt. Diese Variante ist im vorliegenden Fall unter die MMC zu subsummieren.

Erstmals werden also gemäß der Erfindung Standard-Bausteine für die Realisierung der Hardware zur Umsetzung der Parallelschnittstelle auf den seriellen Bus genutzt und trotzdem eine gute Performance erzielt.

Eine bevorzugte Ausführungsform der Erfindung enthält eine Kommunikationseinheit mit einem PLD-Bauelement, einem Taktgeberelement und einem mit den Datenleitungen des MMC-Interface verbindbaren Logikbaustein zum Entkoppeln der Datenpfade der MMC. Bei dieser Ausführungsform ist ein mit dem PLD-Bauelement und dem Logikbaustein verbundenes Schieberegister für den Datenaustausch mit dem MMC-Interface vorhanden.

Vorzugsweise ist das PLD-Bauelement über eine 8-Bit-Leitung mit dem parallelen Standard-Mikroprozessor-Interface verbindbar.

Eine weitere bevorzugte Ausführungsform sieht vor, dass das Schieberegister über eine 16-Bit-Leitung mit dem parallelen Standard-Mikroprozessor-Interface verbindbar ist.

Eine kostengünstige Variante besteht darin, dass 16-Bit-Schieberegister vorhanden sind. So sind in diesem Fall zum Schreiben eines 48-Bit-Befehls in die MMC vom Mikroprozessor-Interface lediglich 3 Schreibzugriffe erforderlich. Zum Lesen eines Sektors mit 512 Bytes aus der MMC sind 256 Lesezugriffe des Mikroprozessors notwendig.

Ein erfindungsgemäßes Verfahren zum seriellen Datenaustausch mit einer MultiMediaCard™ mit MultiMediaCard™-Interface sieht vor, dass Daten zwischen einem parallelen Standard-Mikroprozessor-Interface und dem MultiMediaCard™-Interface über eine an das parallele Standard-Mikroprozessor-Interface angeschlossene Kommunikationseinheit und einem mit dem Multi-MediaCard™-Interface verbundenen Schieberegister versendet werden.

Vorzugsweise umfasst die hier zum Einsatz kommende Kommunikationseinheit die bezüglich der Schaltung zuvor erläuterten Bauelemente, d.h. insbesondere ein Schieberegister. Das zum Einsatz kommende Schieberegister kann wiederum ein 8- oder 16-Bit-Schieberegister sein.

Kurze Beschreibung der Zeichnungen

Im Folgenden ist zur weiteren Erläuterung und zum besseren Verständnis ein Ausführungsbeispiel der Erfindung unter Bezugnahme auf die'beigefügte Zeichnung beschrieben. Es zeigt:

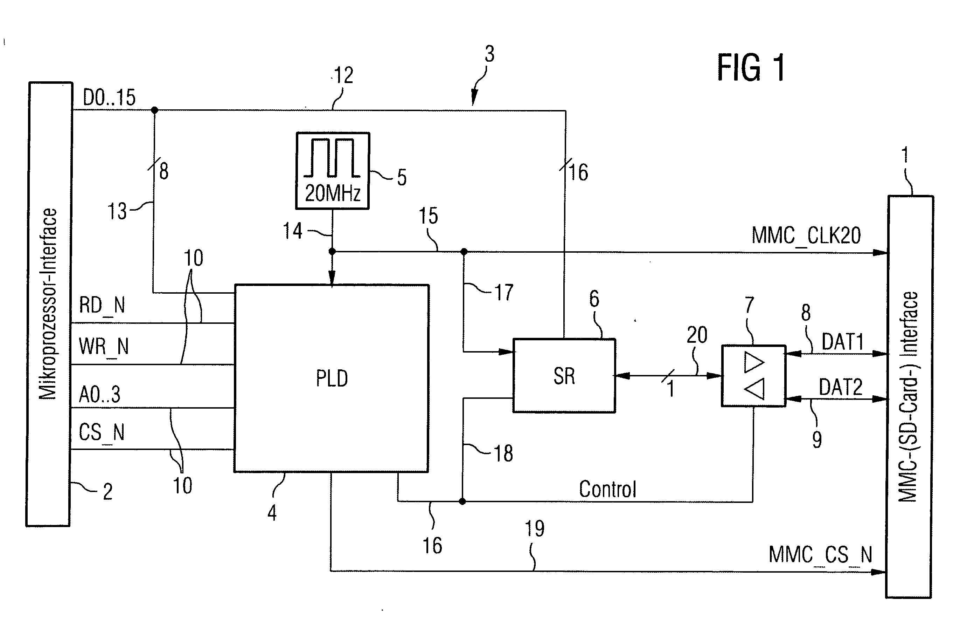

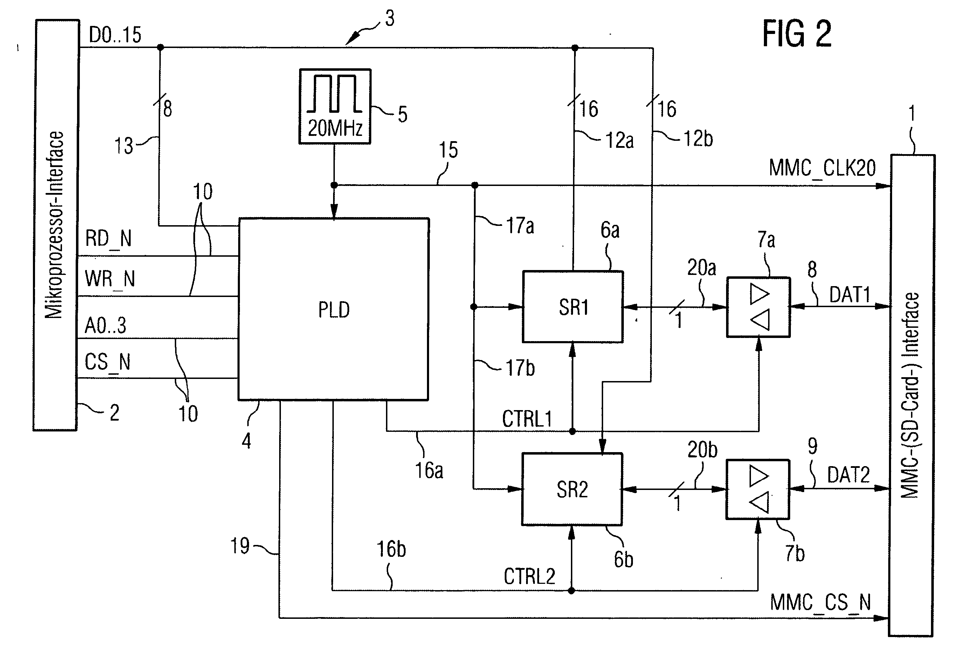

- Fig. 1: eine erste Ausführungsform einer erfindungsgemäßen Schaltung.

Beschreibung eines bevorzugten Ausführungsbeispiels der Erfindung

Vor einer näheren Erläuterung eines bevorzugten Ausführungsbeispiels der Erfindung ist allgemein der grundsätzliche Zugriff auf eine MMC zu beschreiben. Zugriffe auf eine MMC erfolgen in Form von Commands mit zugehörigen Responses sowie block-read und block-write-Transfers. Ein Command ist 48 Bits lang und besteht aus zwei Startbits, dem eigentlichen Command (6 Bits), einem Argument (32 Bits), einer Checksum (7 Bits) und dem Stopbit. Commands sind im SPI-Mode und dem MMC-Mode gleich aufgebaut. Eine Response ist im SPI-Mode je nach Command 8 - 16 oder 32 Bits lang, im MMC-Mode immer 32 Bit lang. Vor einer Response sind zusätzlich acht Leertakte (zum Synchronisieren der MMC) erforderlich. Über Blockzugriffe werden die Nutzdaten in die MMC geschrieben bzw. von dort gelesen. Ein weiterer Unterschied zwischen SPI- und MMC-Mode ist, dass im SPI-Mode über eine erste Datenleitung (DAT1) nur gesendet und über eine zweite Datenleitung (DAT2) nur empfangen werden kann. Somit ist hierdurch ein vereinfachtes Dateninterface geschaffen. Im MMC-Mode müssen dagegen beide Datenleitungen, d.h. DAT1 und DAT2 bidirektional ausgelegt sein.

Unter Bezugnahme auf die Fig. 1 wird eine bevorzugte Ausführungsform einer erfindungsgemäßen Schaltung näher beschrieben. In dieser ersten Ausführungsform ist ein MMC-Interface 1 über eine erfindungsgemäße Schaltung mit Kommunikationseinheit 3 mit einem Standard-Mikroprozessor-Interface 2 verbunden. Dieses parallele Standard-Mikroprozessor-Interface 2 umfasst mehrere Datenleitungen 10 und 12. Die vier Datenleitungen 10 zum Lesen (RD_n), zum Schreiben (WR_R), zum Signalsenden (A 0...3) und für eine Signalüberprüfung (CS_N) sind mit einem PLD-Bauelement 4 (programmable logical device) verbunden.

Dieses PLD-Bauelement 4 ist über ein Taktgeberelement 5 mit beispielsweise 20 MHz getaktet. Das Taktgeberelement 5 ist mit dem PLD-Bauelement 4 über eine Leitung 14 verbunden. Von der Leitung 14 zweigt eine Leitung 15 ab, die zu dem MMC-Interface 1 geht.

Das PLD-Bauelement 4 ist über eine Leitung 19 ebenfalls mit dem MMC-Interface 1 verbunden. Ferner ist eine Leitung 16 vorhanden, die das PLD-Bauelement 4 mit einem Logikbaustein 7 verbindet. Von der Leitung 16 zweigt eine Leitung 18 ab, die in einem Schieberegister 6 endet.

Dieses Schieberegister 6 ist über eine Leitung 17 auch mit der Leitung 15 verbunden. Ferner ist das Schieberegister 6 über eine 1-Bit-Leitung 20 mit dem Logikbaustein 7 verbunden. Der Logikbaustein 7 selbst ist mit den zwei Datenleitungen 8 und 9 des MMC-Interface 1 verbunden.

Schließlich ist noch anzumerken, dass die Leitung 12 das Standard-Mikroprozessor-Interface mit dem Schieberegister verbindet. Diese Leitung 12 ist eine 16-Bit-Leitung. Die Leitung 13 ist eine 8-Bit-Leitung.

Es wird nun beispielhaft das Lesen eines 512 Byte-Sektors ab Adresse 0 im SPI-Mode auf der Grundlage der zuvor erläuterten erfindungsgemäßen Schaltung beschrieben. Bestimmte Commands etc. sind mit den im eingangs erwähnten Datenblatt genannten Abkürzungen beschrieben.
I. Zuerst wird MMC_CS_N auf low gesetzt. Dadurch erfolgt ein Schreibzugriff des Microprozessors an das PLD 4.
II. Daraufhin wird ein 48 Bit-Command (CMD16set_blocklen = 512 Byte) zur MMC gesendet. Der Mikroprozessor berechnet demzufolge das 48 Bit command zur Einstellung der 512 Byte Blocklänge. Es erfolgt das Schreiben der ersten 16 Bit des commands vom Mikroprozessor in das Schieberegister 6. Daraufhin erfolgt ein command vom Mikrocontroller an das PLD 4 zur Übertragung der ersten 16 Bit. Das PLD 4 startet den seriellen Transfer zur MMC 1 über die Datenleitung 8 (DAT1). Dann erfolgt das Schreiben der nächsten 16 Bit des commands vom Mikroprozessor 2 in das Schieberegister 6. Wiederum erfolgt ein Kommando vom Mikrocontroller an das PLD 4 zur Übertragung der nächsten 16 Bit. Daraufhin startet das PLD 4 den seriellen Transfer zur MMC über wiederum die Datenleitung 8 (DAT1). Es werden daraufhin die letzten 16 Bit des commands vom Mikroprozessor in das Schieberegister geschrieben und es erfolgt ein Kommando vom Mikrocontroller an das PLD 4 zur Übertragung der letzten 16 Bit. Das PLD 4 startet wiederum den seriellen Transfer zur MMC 1 über die Datenleitung 8 (DAT1).
III. Nun wird eine 8 Bit response gelesen. Dieser Vorgang umfasst ein Kommando vom Mikrocontroller an das PLD 4 zum seriellen Auslesen der Response aus der MMC 1. Das PLD 4 startet den 16 Bit seriellen Transfer von der MMC 1 in das Schieberegister 6 über die zweite Datenleitung 9 (DAT2). Der Mikrokontroller liest den Inhalt des Schieberregisters 6 und wertet die Response aus.
IV. Nun wird ein 48 Bit command (CMD 17 lesen ab adr = 0) zur MMC 1 gesendet. Dieser Vorgang umfasst, dass der Mikroprozessor das 48 Bit command zur Einstellung der Adresse = 0 berechnet. Der weitere Ablauf ist wie zuvor unter II beschrieben.
V. Wiederum erfolgt nun ein Lesen einer 8 Bit response. Der weitere Ablauf entspricht dem, wie er in III beschrieben ist.
VI. Daraufhin werden 512 Bytes aus der MMC 1 gelesen. Dieser Vorgang umfasst, dass vom Mikrocontroller ein Kommando an das PLD zum seriellen Auslesen des Startbytes (0 x Fe) aus der MMC 1 gesendet wird. Das PLD 4 startet dann den 8 Bit seriellen Transfer von der MMC 1 in das Schieberegister 6 über die zweite Datenleitung 9 (DAT2). Der Mikrocontroller liest das Startbyte aus dem Schieberegister 6 und vom Mikrocontroller ergeht ein Kommando an das PLD 4 zum seriellen Auslesen der ersten zwei Bytes aus der MMC 1. Das PLD 4 startet wiederum einen 16 Bit seriellen Transfer von der MMC 1 in das Schieberegister 6 über die zweite Datenleitung 9 (DAT2). Jetzt liest der Mikrocontroller die ersten zwei Bytes aus dem Schieberegister 6. Wiederum erfolgt ein Kommando vom Mikrokontroller an das PLD 4 zum seriellen Auslesen der nächsten zwei Bytes aus der MMC 1. Wie zuvor startet nun wiederum das PLD 4 den 16 Bit seriellen Transfer von der MMC 1 in das Schieberegister 6 über die zweite Datenleitung 9. Wiederum liest der Mikrocontroller die nächsten zwei Bytes aus dem Schieberegister 6. Dieser Ablauf wiederholt sich bis zur Übertragung der letzten zwei Bytes des Sektors. Nach den letzten zwei Bytes erfolgt die Übertragung einer zwei Byte checksum. Der Ablauf hierfür ist wie zuvor beschrieben. Der Mikrocontroller berechnet aus den gelesenen 5 und 12 Bytes eine eigene checksum und vergleicht sie mit der ausgelesenen.
VII. Daraufhin wird MMC_CS_N auf high gesetzt. Nun erfolgt ein Schreibzugriff des Mikroprozessors 2 auf das PLD 4. Ein Schreibvorgang eines 512 Byte Sektors ab Adresse 0 im SPI mode erfolgt wie folgt. Der Ablauf des Schreibens eines Sektors ist bis auf das block_write und dem Schreibbefehl (CMD24) identisch mit dem Lesen eines 512 Byte Sektors, wie es zuvor beschrieben wurde. Im Folgenden wird deshalb nur das Block_write beschrieben. Es wird das Startbyte (0 x FeE) vom Mikrocontroller in das Schieberegister 6 geschrieben. Dann erfolgt ein Command vom Mikrocontroller an das PLD 4 zum Start des 8 Bit seriellen Transfers vom Schieberegister 6 in die MMC 1 über die Datenleitung 9 (DAT2). Es werden nun die ersten zwei Bytes vom Mikrocontroller in das Schieberegister 6 geschrieben. Daraufhin erfolgt ein weiteres Command vom Mikrocontroller an das PLD 4 zum Start des 16 Bit seriellen Transfers der ersten zwei Bytes vom Schieberegister 6 in die MMC 1 über die zweite Datenleitung 9 (DAT2). Nun werden die nächsten zwei Bytes vom Mikrocontroller in das Schieberegister geschrieben. Wiederum erfolgt ein Command vom Mikrocontroller an das PLD 4 zum Start eines 16 Bit seriellen Transfers der nächsten zwei Bytes vom Schieberegister 6 in die MMC 1 über die zweite Datenleitung 9. Der weitere Ablauf ist wie oben beschrieben bis zur Übertragung der letzten zwei Bytes des Sektors. Nach den letzten zwei Bytes erfolgt die Übertragung einer 2 Byte checksum. Der weitere Ablauf ist wie zuvor beschrieben. Der Mikrocontroller berechnet nun aus den 512 Bytes Nutzdaten eine checksum und überträgt sie zur MMC 1. Dieser Ablauf ist wie oben beschrieben.

Nach Übertragung der letzten zwei Bytes der checksum liefert die MMC 1 ein data responce token zur Quittierung der erfolgreichen Übertragung. Es erfolgt ein Kommando vom Mikrocontroller an das PLD 4 zum seriellen Auslesen des data responce token der MMC 1. Das PLD 4 startet den 8 Bit seriellen Transfer von der MMC 1 in das Schieberegister 6 über die Datenleitung 9 (DAT2). Der Mikrocontroller liest das token aus dem Schieberegister 6 und wertet es aus. Wenn das token o.k. ist, beginnt die MMC 1 mit dem internen Schreibvorgang. Während dieser Zeit nimmt die MMC 1 keine commands von außen an. Zur Kontrolle des Abschlusses des internen Schreibvorgangs muss der Mikrocontroller die Busy-Leitung 9 (DAT2) der MMC 1 zyklisch abfragen. Bei DAT2 = low ist die MMC 1 noch busy, bei DAT2 = high ist die MMC 1 fertig.

Die Abfrage auf busy geschieht wie folgt. Es wird ein Kommando vom Mikrocontroller an das PLD 4 gesendet zum seriellen Auslesen von zwei Bytes aus der MMC 1. Das PLD 4 startet einen 16 Bit seriellen transfer von der MMC 1 in das Schieberegister 6 über die Datenleitung 9 (DAT2). Der Mikrocontroller liest den Inhalt des Schieberegisters 6 und wertet die Daten aus. Dieser Vorgang wiederholt sich so oft, bis die Datenleitung 9 auf high gesetzt ist. An dieser Stelle muss der Mikrocontroller unbedingt eine interne Zeitüberbrückung mitlaufen lassen, um ein deadlock zu vermeiden.

Wie zuvor erläutert, ist ein Schreib- und Lesevorgang mittels einer erfindungsgemäßen Schaltung mit Schieberegister und PLD einfach und unterstützt sowohl einen SPI-Modus als auch einen MMC-Modus, obwohl hier nur der SPI-Modus eingehender beschrieben wurde. Für einen Fachmann ist es aber ohne weiteres möglich, anhand der ihm zur Verfügung stehenden Daten über die MMC und der Offenbarung der vorliegenden Beschreibung auch einen MMC-Modus mit der erfindungsgemäßen Schaltung zu unterstützen.

## Patentansprüche

1. Schaltung zur Bildung einer seriellen Schnittstelle für eine MultiMediaCard™ mit MultiMediaCard™-Interface (1) mit einer an ein paralleles Standard-Mikroprozessor-Interface (2) anschließbaren Kommunikationseinheit (3) und wenigstens einem mit dem MultiMediaCard™-Interface (1) verbindbaren Schieberegister (6; 6a, 6b).

2. Schaltung nach Anspruch 1, **dadurch gekennzeichnet, dass** die Kommunikationseinheit (3) ein PLD-Bauelement (4), ein Taktgeberelement (5) und einen mit den Datenleitungen (8, 9) des MultiMediaCard™-Interface (1) verbindbaren Logikbaustein (7) zum Entkoppeln der Datenpfade der MultiMediaCard™ umfasst, wobei ein mit dem PLD-Bauelement (4) und dem Logikbaustein (7) verbundenes Schieberegister (6) für den Datenaustausch mit dem MultiMediaCard™-Interface (1) vorhanden ist.

3. Schaltung nach einem oder mehreren der Ansprüche 1 und 2, **dadurch gekennzeichnet, dass** das PLD-Bauelement (4) über eine 8-Bit-Leitung (13) mit dem parallelen Standard-Mikroprozessor-Interface (2) verbindbar ist.

4. Schaltung nach einem oder mehreren der Ansprüche 1-3, **dadurch gekennzeichnet, dass** das Schieberegister (6; 6a, 6b) über eine 16-Bit-Leitung (12; 12a, 12b) mit dem parallelen Standard-Mikroprozessor-Interface (2) verbindbar ist.

5. Schaltung nach einem oder mehreren der vorangehenden Ansprüche, **dadurch gekennzeichnet, dass** das Schieberegister (6; 6a, 6b) ein 16-Bit-Schieberegister ist.

6. Verfahren zum seriellen Datenaustausch mit einer MultiMediaCard™ mit MultiMediaCard™-Interface (1), in dem Daten zwischen einem parallelem Standard-Mikroprozessor-Interface (2) und dem MultiMediaCard™-Interface (1) über eine an das parallele Standard-Mikroprozessor-Interface (2) angeschlossene Kommunikationseinheit (3) und einem mit dem MultiMediaCard™-Interface (1) verbundenen Schieberegister (6; 6a, 6b) versendet werden.

7. Verfahren nach Anspruch 6, **dadurch gekennzeichnet, dass** die Kommunikationseinheit (3) ein PLD-Bauelement (4), ein Taktgeberelement (5) und ein mit den Datenleitungen (8, 9) des MultiMediaCard™-Interface (1) verbindbarer Logikbaustein (7) umfasst, wobei ein einziges mit dem PLD-Bauelement (4) und dem Logikbaustein (7) verbundenes Schieberegister (6) für den Datenaustausch mit dem MultiMediaCard™-Interface (1) vorhanden ist.
